# FASCICULE DE BREVET EUROPEEN

(11) **EP 3 172 412 B1**
(45) Date de publication et mention de la délivrance du brevet: **25.04.2018**
(21) Numéro de dépôt: 15759858.2
(22) Date de dépôt: 21.07.2015
(51) Int. Cl.: F01D 21/02, F02C 7/232, F02C 9/28, F02C 9/46

(54) **DISPOSITIF DE PROTECTION CONTRE SURVITESSE D'UN MOTEUR D'AÉRONEF**
ÜBERDREHZAHLSCHUTZ VORRICHTUNG EINES FLUGZEUGMOTORS
OVERSPEED PROTECTION DEVICE OF AN AIRCRAFT ENGINE

(30) Priorité: 21.07.2014 FR 1457032
(43) Date de publication de la demande: 31.05.2017
(73) Titulaire: Safran Electronics & Defense, 92100 Boulogne-Billancourt (FR); Safran Helicopter Engines, 64510 Bordes (FR)
(72) Inventeur: MONTOYA, Michael, 92100 Boulogne - Billancourt (FR); MARTI, Nicolas, 92100 Boulogne - Billancourt (FR); LANGFORD, Stephen, F-64000 Pau (FR); SAMSON, Rafaël, F-40170 Lit et Mixe (FR)
(74) Mandataire: Regimbeau
(86) Numéro de dépôt international: PCT/FR2015/052006
(87) Numéro de publication internationale: WO 2016/012713

(56) Documents cités:
- EP-A1- 2 592 253
- FR-A1- 2 956 380
- US-A- 4 712 372
- US-B1- 6 321 525

## Description

### DOMAINE TECHNIQUE GENERAL

L'invention concerne l'alimentation des moteurs d'aéronef et concerne plus particulièrement leur protection contre survitesse.

### ETAT DE LA TECHNIQUE

Dans un moteur d'aéronef, une vitesse de rotation excessive d'un arbre peut avoir de graves conséquences, à savoir, notamment, entraîner l'éclatement de disques rotors montés sur l'arbre. Aussi, un tel moteur est habituellement équipé d'un dispositif de protection survitesse qui reçoit une information représentative de la vitesse de rotation d'un arbre de moteur et commande une coupure, une régulation ou encore une limitation de l'alimentation du moteur en carburant lorsque, par exemple, cette vitesse de rotation dépasse un seuil prédéterminé ou lorsque une accélération, fonction de cette vitesse dépasse un seuil.

La fonction de sécurité survitesse peut être assurée par une unité électronique de protection survitesse qui pilote une servovalve ou tout autre organe configurée pour couper/réguler/limiter l'alimentation en carburant du moteur ou empêcher le moteur de partir en survitesse.

Cette unité électronique est habituellement ségréguée de l'unité de régulation du moteur (« *Engine Control Unit* », (ECU)) et est alimentée par le réseau de bord de l'aéronef.

Un problème avec ce type de solution est que la fonction de sécurité survitesse est alimentée par le même réseau de bord que la fonction de régulation impliquant donc un mode commun avec l'ECU ce qui implique qu'une panne de l'un peut entrainer une panne de l'autre.

### PRESENTATION DE L'INVENTION

Un but de l'invention est de proposer une solution qui offre un bon compromis d'indépendance entre la fonction de sécurité survitesse et l'unité de régulation du moteur, sans requérir une complexification de l'alimentation.

A cet effet, l'invention propose selon la première revendication un dispositif de protection contre survitesse d'un moteur d'aéronef comprenant un système d'alimentation en carburant dudit moteur d'aéronef, le dispositif de protection comprenant une source de tension configurée pour délivrer une tension selon une polarisation négative ou positive ;
un dispositif de commande logique connectée en série avec la source de tension, ledit dispositif de commande logique étant configuré pour ouvrir ou fermer le système d'alimentation en fonction de la polarisation de la tension délivrée;
une première unité électronique connectée en série avec la source de tension et le dispositif de commande logique et qui comprend
un premier capteur de vitesse délivrant un premier signal électrique discret de commande fonction de la vitesse du moteur ;
un premier interrupteur normalement fermé commandé par ledit premier signal électrique discret de commande ;
une seconde unité électronique connectée en série avec la source de tension et le dispositif de commande logique et qui comprend
un second capteur de vitesse délivrant un second signal électrique discret de commande fonction de la vitesse du moteur ;
un second interrupteur normalement fermé commandé par ledit second signal électrique discret de commande ;
le premier interrupteur normalement fermé et le second interrupteur normalement fermé présentant un état 'fermé' laissant passer un courant et un état 'ouvert' ne laissant passer aucun courant ;
le dispositif de commande logique étant disposé entre d'une part la première unité électronique et la seconde unité électronique ;
les premier et second interrupteurs normalement fermés n'étant sensibles respectivement aux premier et second signaux électriques discrets de commande que si la tension a une même polarisation prédéterminée, les premier et second interrupteurs permettant, pour cette même polarisation prédéterminée, aux premières et secondes unités électroniques d'isoler ou de connecter le dispositif de commande logique de la source de tension en fonction desdits signaux électriques discrets de commande.

L'invention est avantageusement complétée par les caractéristiques optionnelles suivantes, prises seules ou en une quelconque association de leur combinaison techniquement possible :
- les premier et second capteurs de vitesse sont configurés pour mesurer une vitesse du moteur et pour délivrer des signaux électriques discrets de commande présentant un état haut pour une vitesse du moteur Vmoteur telle que Vseuil1 ≤ Vmoteur< Vseuil2, avec Vseuil1 un premier seuil et Vseuil2 un second seuil caractéristique d'une survitesse du moteur de l'aéronef ; un état bas pour une vitesse du moteur telle que 0 ≤ Vmoteur < Vseuil1 et telle que Vmoteur ≥ Vseuil2, ou bien lorsque le moteur présente une panne ;
- les première et seconde unités électroniques isolent le dispositif de commande logique de la source de tension dès lors que les premier et second interrupteurs passent d'un état 'ouvert' à un état 'fermé' alors que le dispositif de commande logique était ouvert, le changement d'état desdits premier et second interrupteurs provoquant la fermeture de la servovalve.
- les premier et second capteurs de vitesse sont configurés pour fournir à partir de la rotation de du moteur une énergie électrique afin d'autoalimenter ledit dispositif de protection.
- les premier et second capteurs de vitesses sont du type inductif, par exemple à roue phonique, du type enroulement d'alternateur ou bien un capteur électrique actif de mesure de vitesse.
- Le dispositif comprend un polariseur monté en parallèle de la source de tension, ledit polariseur étant configuré pour polariser la tension issue de la source de tension.
- les premier et second interrupteurs sont constitués par un transistor de préférence du type Darlington ou bipolaire. Les avantages de l'invention sont multiples.
- L'architecture simplexe partagée en deux fonctions indépendantes sur deux boitiers indépendants ;
- Il y a une ségrégation totale entre la fonction de sécurité survitesse et l'unité de régulation du moteur ;
- Des sources d'alimentation différentes provenant de l'aéronef ou du système de régulation entre la fonction de sécurité survitesse et l'unité de régulation du moteur peuvent être utilisées ;
- L'indépendance d'alimentation permet de s'affranchir de l'exigence de tenue au feu sur la fonction alimentation de la partie régulation ;
- La détection de panne est améliorée car la capacité de fonctionnement du dispositif est liée au bon fonctionnement des capteurs.
- L'architecture du dispositif permet de maintenir un actionneur simplex pour empêcher le départ en survitesse tout garantissant la tenue des exigences de sureté de fonctionnement, la capacité à actionner le dispositif étant testé avant chaque démarrage, avec pour conséquence en cas de panne le non-démarrage.

L'invention concerne également un système d'alimentation en carburant d'un moteur d'un aéronef comprenant un dispositif de protection contre survitesse selon la première revendication. L'invention concerne en outre un moteur d'aéronef comprenant un dispositif d'alimentation selon la première revendication.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un dispositif de protection selon l'invention ;
- la figure 2 illustre un mode de réalisation d'un interrupteur d'un dispositif de protection selon l'invention ;
- les figures 3 à 5 illustrent un fonctionnement d'un dispositif de protection selon l'invention.

Sur l'ensemble des figures les éléments similaires portent des références identiques.

### DESCRIPTION DETAILLEE DE L'INVENTION

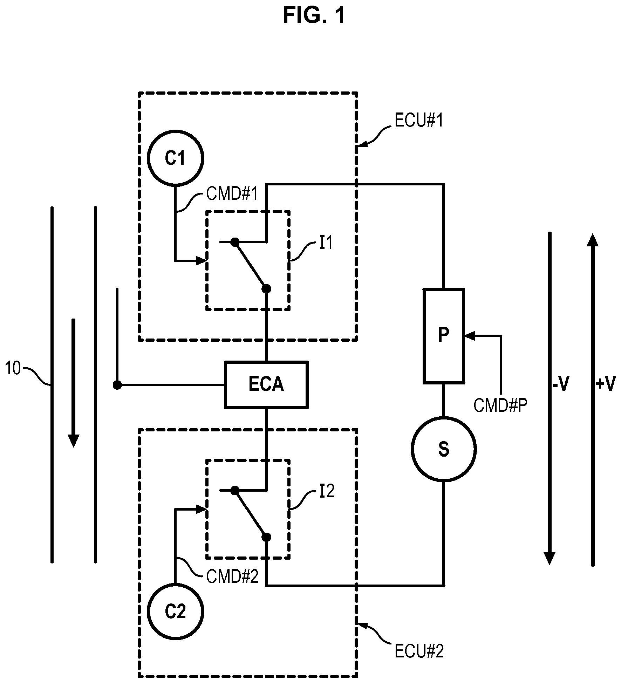

On a illustré sur la **figure 1** un dispositif de protection contre survitesse d'un moteur d'un aéronef selon un mode de réalisation de l'invention.

Le moteur (non représente) de l'aéronef comprend par exemple une conduite d'alimentation 10 en carburant qui peut être fermée ou limitée par le dispositif de protection. Bien entendu, le dispositif de protection s'applique à n'importe quelle machine tournante comprenant un dispositif d'alimentation en carburant.

Bien entendu l'invention décrite en relation avec ce mode de réalisation peut s'appliquer à tout moyen permettant d'empêcher le moteur de partir en survitesse (arrêt, mise au ralenti, etc.).

Le dispositif de protection comprend une source S de tension configurée pour délivrer une tension V selon une polarisation négative ou positive. Ainsi, la source S de tension est configurée pour délivrer une tension d'amplitude ayant pour valeur absolue |V| selon une polarisation négative ou positive. La source de tension délivre donc une tension d'alimentation égale à ±V en fonction de la polarisation appliquée.

Le dispositif de protection comprend un polariseur P qui est commandé par un signal de commande CMD#P issu d'un ordre émis depuis l'aéronef, soit par un ordre émis par un calculateur de régulation (non représenté), sur la base d'algorithmes spécifiques assurant le basculement de la polarisation (non détaillés ici).

Afin de pouvoir fermer ou ouvrir la conduite d'alimentation 10 en carburant, le dispositif de protection comprend à titre d'exemple non limitatif un dispositif de commande logique tel qu'une servovalve ECA connectée en série avec la source S de tension. La servovalve ECA est commandée en fonction de la polarisation de la tension délivrée par la source S de tension.

De manière connue en soit, cette servovalve ECA est bistable et comprend donc deux états stables. En effet, on considère que la servovalve passe d'un état « ouvert » (conduite d'alimentation 10 ouverte) à un état « fermé » (conduite d'alimentation 10 fermée) dès lors que la polarisation de la tension change pour alimenter selon un courant positif ou négatif la servovalve ECA.

Le dispositif de protection comprend une première unité électronique ECU#1 connectée en série avec la source S de tension et la servovalve ECA, la première unité électronique ECU#1 étant, sur la figure, en aval de la servovalve.

La première unité électronique ECU#1 comprend un premier capteur C1 de vitesse délivrant un premier signal électrique discret de commande CMD#1 fonction de la vitesse du moteur et un premier interrupteur I1 normalement fermé commandé par le premier signal électrique discret de commande CMD#1.

On précise ici que l'on entend par le terme capteur de vitesse un ensemble permettant à partir d'une information physique telle que la vitesse de déterminer un signal de commande au moyen d'un étage de conversion information physique / signal électrique.

En outre, le dispositif de protection comprend une seconde unité électronique ECU#2 connectée en série avec la source S de tension et la servovalve ECA, la seconde unité électronique ECU#2 étant, sur la figure, en amont de la servovalve ECA.

Comme on l'aura compris, la servovalve ECA est disposée d'une part entre la première unité électronique ECU#1 et d'autre part la seconde unité électronique ECU#2.

La seconde unité électronique ECU#2 comprend un second capteur C2 de vitesse délivrant un second signal électrique discret de commande CMD#2 fonction de la vitesse du moteur et un second interrupteur I2 normalement fermé commandé par le second signal électrique discret de commande CMD#2.

On considère qu'un interrupteur normalement fermé présente un état 'fermé' laissant passer un courant et un état 'ouvert' ne laissant passer aucun courant.

Les premier C1 et second C2 capteurs de vitesse sont configurés pour mesurer une vitesse du moteur et pour délivrer des signaux électriques discrets de commande présentant :
- un état haut ('1') pour une vitesse du moteur Vmoteur telle que Vseuil1 ≤ Vmoteur< Vseuil2, avec Vseuil1 un premier seuil et Vseuil2 un second seuil caractéristique d'une survitesse ;
- un état bas ('0') pour une vitesse du moteur telle que 0 ≤ Vmoteur < Vseuil1 et telle que Vmoteur ≥ Vseuil2, ou bien lorsque le moteur présente une panne.

Le second seuil est bien entendu supérieur au premier seuil.

Ainsi, pour un moteur ayant atteint une vitesse supérieure au premier seuil (Vseuil1) l'état haut '1' correspond à une absence de panne ou une absence de survitesse et l'état bas '0' correspond à une survitesse ou une panne. Un premier seuil Vseuil1 typique est par exemple une vitesse du moteur de l'aéronef égale à 30% de la vitesse de croisière souhaitée pour le moteur de l'aéronef.

En revanche, on considère que le moteur est en survitesse dès lors que la vitesse est supérieure ou égale au second seuil typiquement (Vseuil2) compris entre 110% et 130%, typiquement 120% de la vitesse de croisière du moteur de l'aéronef.

En outre, les premier C1 et second C2 capteurs de vitesse mesurent la vitesse à des endroits différents afin d'obtenir une indépendance des mesures et n'ayant pas de mode commun à part la rotation du moteur.

Ceci permet d'assurer une tenue au feu suffisante et éviter des effets de mode commun, en outre des précautions de routage sont mises en oeuvre pour assurer une ségrégation topologique au niveau des mesures.

Ces premier C1 et second C2 capteurs de vitesse sont configurés pour fournir à partir de la rotation de du moteur une énergie électrique afin d'autoalimenter le dispositif de protection.

Les premier et second capteurs sont de type inductif ou, de manière plus générale, du type capable de fournir une indication de vitesse et de puissance. On utilise alors ce capteur comme source de puissance et également source de mesure. Un type de capteur est par exemple une roue phonique ou du type enroulement d'alternateur ou bien un capteur électrique actif de position angulaire (en anglais, « *Rotary Variable Differential Transformer* », (RVDT).

Dans le dispositif de protection, la servovalve ECA est encadrée par respectivement la première unité ECU#1 et la seconde unité ECU#2 électroniques qui permettent d'isoler sous certaines conditions la servovalve ECA de la source S de tension.

En effet, les premier I1 et second I2 interrupteurs de chacune des première ECU#1 et seconde ECU#2 unités électroniques sont sensibles, pour une seule polarisation de la tension aux premier CMD#1 et second CMD#2 signaux électriques discrets de commande.

Afin de modifier la polarisation de la tension, le dispositif de protection comprend un polariseur P qui est commandé par un signal de commande CMD#P qui est fonction d'un état du moteur de l'aéronef : 'démarrage', 'ralenti' (c'est-à-dire ayant démarré).

On considère que les premier I1 et second I2 interrupteurs sont sensibles aux premier CMD#1 et second CMD#2 signaux électriques discrets de commande lorsque la source S de tension délivre une tension a une polarisation positive c'est-à-dire égale à +V.

On considère également que lorsque la polarisation est positive :
- Le premier interrupteur I1 est fermé pour un premier signal électrique discret de commande CMD#1='0'(état bas) ;
- Le premier interrupteur I1 est ouvert pour un premier signal électrique discret de commande CMD#1='1' (état haut) ;
- Le second interrupteur I2 est fermé pour un second signal électrique discret de commande CMD#2='0' (état bas) ;
- Le second interrupteur I2 est ouvert pour un second signal électrique discret de commande CMD#2='1' (état haut).

Pour cette polarisation positive, les première ECU#1 et seconde ECU#2 unités électroniques ferment la servovalve ECA de la source S de tension dès lors que les premier I1 et second I2 interrupteurs passent d'un état 'ouvert' (CMD#1=', CMD#2='1') à un état 'fermé' (CMD#1='0',CMD#2='0') et que la servovalve ECA était ouverte, le changement d'état des premier I1 et second I2 interrupteurs provoquant ainsi la fermeture de la servovalve (ECA).

Ainsi, on s'assure que les deux signaux électriques de commandes sont toutes deux à l'état haut pour fermer la conduite 10 de carburant, ce qui évite les fermetures intempestives de cette dernière. En effet, lorsque l'un ou l'autre des premier ou second interrupteurs est 'ouvert' alors que l'autre est 'fermé', la servovalve ECA ne peut être alimentée par la source S de tension. Ceci est d'autant plus avantageux que les première ECU#1 et seconde ECU#2 unités électroniques sont indépendantes du fait que les premier C1 et second C2 capteurs mesurent la vitesse du moteur de l'aéronef de manière indépendante.

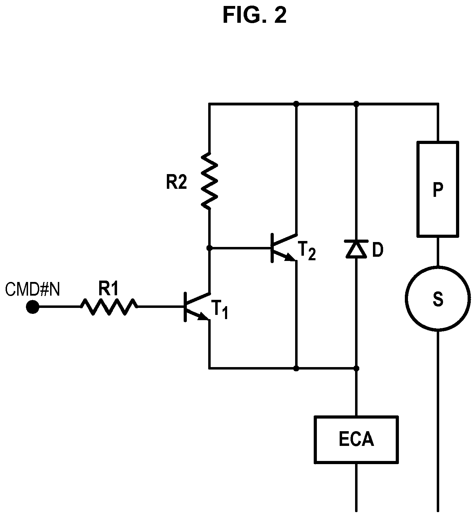

On a illustré sur la **figure 2** un circuit électronique possible d'une unité électronique (la première ECU#1 ou la deuxième ECU#2) du dispositif de protection ci-dessus décrit.

L'interrupteur normalement fermé (le premier I1 ou le deuxième I2) comprend un premier transistor T1 NPN commandé par le signal électrique discret de commande CMD#N (N = 1 ou 2) et un second transistor T2 NPN, le collecteur du premier transistor T1 est connecté à la base du second transistor T2.

Le circuit comprend également une diode D connectée entre la servovalve ECA et la source 11 de tension, la diode D montée en inverse du transistor T2.

En outre, le circuit comprend une première résistance R1 connectée à la base du premier transistor T1, la première résistance R1 permet d'appliquer le signal électrique de commande CMD#N à la base du premier transistor T1.

En outre, une seconde résistance R2 est connectée entre la base du second transistor T2 et le collecteur du second transistor T2.

De manière avantageuse, le second transistor T2 est du type Darlington. Ceci présente l'avantage de polariser le transistor T2 avec un très faible courant et limiter de manière importante les courants de fuite lorsque le transistor T2 est ouvert.

On décrit dans ce qui suit un fonctionnement préférentiel du dispositif de protection ci-dessus décrit.

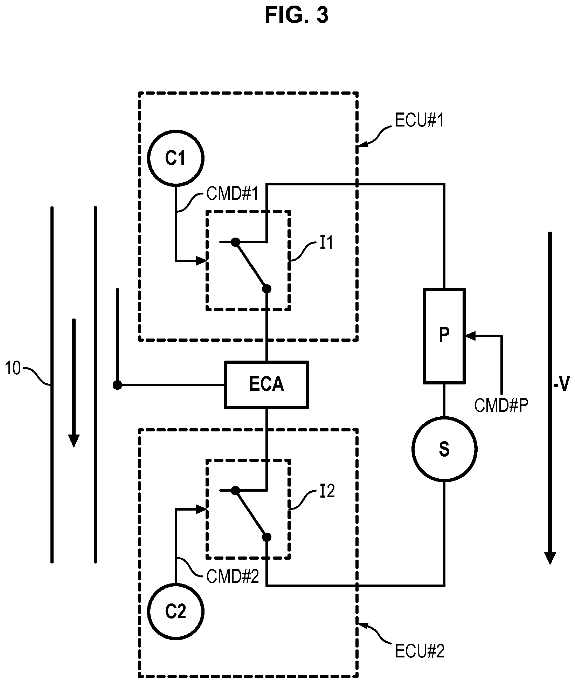

En relation avec la **figure 3**, l'état du moteur de l'aéronef est 'démarrage'. Le polariseur P reçoit une commande CMD#P commandant la source de tension pour qu'elle délivre une tension ayant une polarisation négative égale à -V. Comme on l'aura compris il faut que le moteur soit donc alimenté en carburant et que les interrupteurs I1, I2 normalement fermés ne soient pas sensibles aux signaux électriques de commande CMD#1, CMD#2 afin de ne pas empêcher la fermeture intempestive de la conduite 10 d'alimentation en carburant du moteur qui est dans ce cas ouverte. Au cours du démarrage, les premier et second capteurs C1, C2 délivrent respectivement des premier et second signaux électriques discrets de commande CMD#1, CMD#2 à l'état bas (CMD#1 = '0', CMD#2 = '0'). Le moteur peut démarrer. On note que qu'en mode 'démarrage', seul l'état des diodes compte de sorte que le dispositif de commande est insensible aux signaux électriques de commande CMD#1, CMD#2.

Le moteur de l'aéronef passe ensuite dans l'état 'démarré'. Par rapport à l'état 'démarrage', les premier C1 et second C2 capteurs délivrent, maintenant, des premier et second signaux électriques discrets de commande CMD#1, CMD#2 à l'état haut (CMD#1 = '1', CMD#2 = '1'), la vitesse du moteur étant à 30% de sa vitesse de croisière. Bien entendu, la servovalve ECA maintient toujours la conduite 10 de carburant ouverte pour permettre l'alimentation du moteur en carburant. C'est à partir de cet état que la protection contre survitesse doit être active.

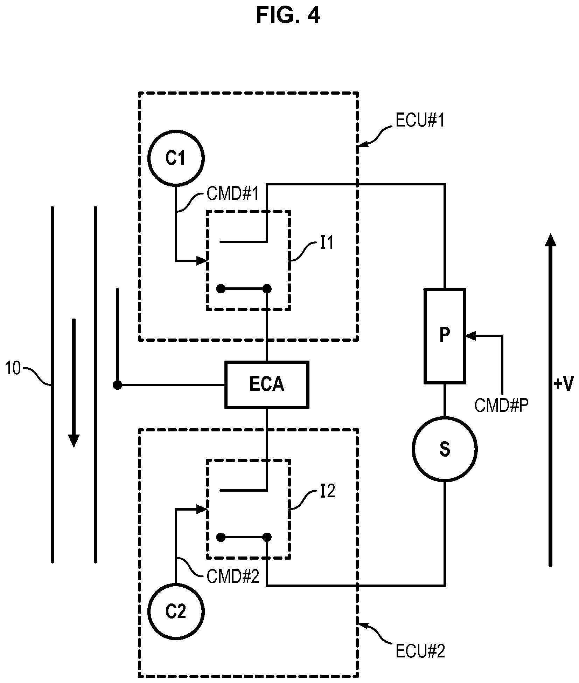

En relation avec la **figure 4**, l'état du moteur de l'aéronef est 'ralenti', c'est-à-dire qu'il a pu démarrer. Dans ce cas, la protection contre survitesse doit être active. Les premier et second signaux électriques discrets de commande CMD#1, CMD#2 sont à l'état haut (CMD#1 = '1', CMD#2 = '1'), et le polariseur P reçoit une commande CMD#P commandant la source S de tension pour qu'elle délivre une tension ayant une polarisation positive égale à +V. Dans ce cas, les premier et second interrupteurs I1, I2 sont sensibles respectivement aux signaux électriques de commande CMD#1, CMD#2 et passent alors de l'état 'fermé' à 'ouvert'. Ainsi, la servovalve n'est plus alimentée de sorte que le changement de polarisation de la tension délivrée par la source S de tension est sans effet sur cette dernière. Le moteur de l'aéronef est donc toujours alimenté en carburant, la servovalve ECA maintenant ouverte. En outre, les premier C1 et second C2 capteurs délivrent, toujours, des premier et second signaux électriques discrets de commande CMD#1, CMD#2 à l'état haut (CMD#1 = '1', CMD#2 = '1'), la vitesse du moteur étant toujours supérieure à 30% de la vitesse de croisière du moteur.

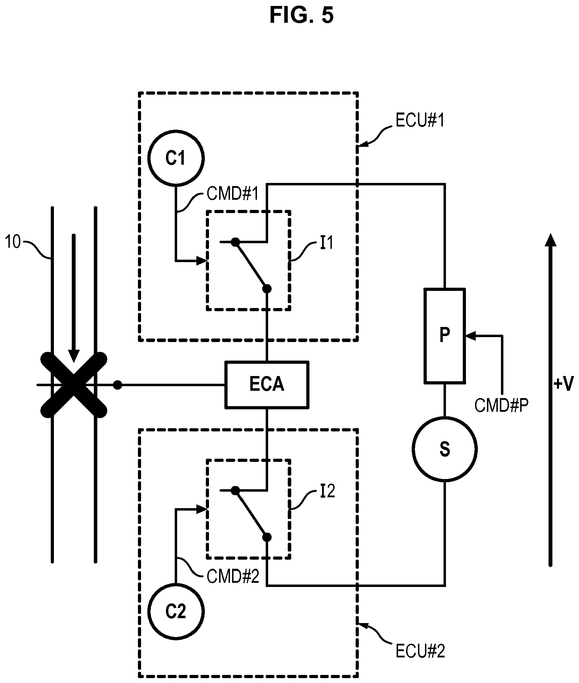

En relation avec la **figure 5**, l'état du moteur de l'aéronef est 'défaut'. Un défaut est par exemple une perte du premier et/ou du second signal électrique discret de commande CMD#1, CMD#2) ou une détection d'une survitesse du moteur. La perte peut être due à une défaillance du moteur ou bien à une défaillance du premier et/ou du second capteur(s) de vitesse C1, C2. La fonction de protection étant active (la source S de tension délivrant une tension ayant une polarisation positive et égale à +V), les premier et second interrupteurs I1, I2 sont sensibles à respectivement les premier et second signaux électriques discrets de commande CMD#1, CMD#2. Toutefois, étant donné que les première ECU#1 et seconde ECU#2 unité électroniques sont de part et d'autre de la servovalve ECA il faut, pour la connecter à la source S de tension, que les deux interrupteurs I1, I2 soient à l'état fermé. De cette manière elle peut changer d'état (elle était ouverte précédemment) puisque la polarisation aura changée. Ainsi, on a une fermeture de la conduite 10 de carburant que lorsque les deux signaux électriques de commande sont à l'état bas (CMD#1 = '0', CMD#2 = '0'). Comme explicité précédemment, du fait que les états des signaux électriques de commande sont indépendants, la fermeture de la conduite 10 de carburant n'est pas intempestive.

L'invention n'est pas limitée au dispositif de protection ci-dessus décrit et concerne également un système d'alimentation en carburant d'un moteur d'un aéronef comprenant un dispositif de protection contre survitesse ci-dessus décrit ainsi qu'un moteur d'aéronef comprenant un tel dispositif d'alimentation.

## Revendications

1. Dispositif de protection contre survitesse d'un moteur d'aéronef comprenant un système (10) d'alimentation en carburant dudit moteur d'aéronef, le dispositif de protection comprenant
une source (S) de tension configurée pour délivrer une tension selon une polarisation négative ou positive ;
un dispositif de commande logique (ECA) connectée en série avec la source (S) de tension, ledit dispositif de commande logique (ECA) étant configuré pour ouvrir ou fermer le système (10) d'alimentation en fonction de la polarisation de la tension délivrée;
une première unité électronique (ECU#1) connectée en série avec la source de tension et le dispositif de commande logique (ECA) et qui comprend
un premier capteur (C1) de vitesse délivrant un premier signal électrique discret de commande (CMD#1) fonction de la vitesse du moteur ;
un premier interrupteur (I1) normalement fermé commandé par ledit premier signal électrique discret de commande ;
une seconde unité électronique (ECU#2) connectée en série avec la source de tension et le dispositif de commande logique (ECA) et qui comprend
un second capteur (C2) de vitesse délivrant un second signal électrique discret de commande (CMD#2) fonction de la vitesse du moteur ;
un second interrupteur (I2) normalement fermé commandé par ledit second signal électrique discret de commande (CMD#2) ;
le premier interrupteur (I1) normalement fermé et le second interrupteur (I2) normalement fermé présentant un état 'fermé' laissant passer un courant et un état 'ouvert' ne laissant passer aucun courant ;
le dispositif de commande logique (ECA) étant disposé entre d'une part la première unité électronique (ECU#1) et la seconde unité électronique (ECU#2) ;
les premier (I1) et second (I2) interrupteurs normalement fermés n'étant sensibles respectivement aux premier et second signaux électriques discrets de commande que si la tension a une même polarisation prédéterminée, les premier (I1) et second (I2) interrupteurs permettant, pour cette même polarisation prédéterminée, aux premières (ECU#1) et secondes (ECU#2) unités électroniques d'isoler ou de connecter le dispositif de commande logique (ECA) de la source (S) de tension en fonction desdits signaux électriques discrets de commande.

2. Dispositif de protection selon la revendication 1, dans lequel les premier et second capteurs de vitesse sont configurés pour mesurer une vitesse du moteur et pour délivrer des signaux électriques discrets de commande présentant
- un état haut ('1') pour une vitesse du moteur Vmoteur telle que Vseuil1 ≤ Vmoteur< Vseuil2, avec Vseuil1 un premier seuil et Vseuil2 un second seuil caractéristique d'une survitesse ;
- un état bas ('0') pour une vitesse du moteur telle que 0 ≤ Vmoteur < Vseuil1 et telle que Vmoteur ≥ Vseuil2, ou bien lorsque le moteur présente une panne.

3. Dispositif de protection selon l'une des revendications précédentes, dans lequel les première (ECU#1) et seconde (ECU#2) unités électroniques sont configurées pour connecter le dispositif de commande logique (ECA) à la source (S) de tension dès lors que les premier (I1) et second (I2) interrupteurs passent d'un état 'ouvert' à un état 'fermé' alors que le dispositif de commande logique (ECA) était ouvert, le changement d'état desdits premier (I1) et second (I2) interrupteurs provoquant la fermeture de la servovalve (ECA).

4. Dispositif de protection selon l'une des revendications précédentes, dans lequel les premier et second capteurs de vitesse sont configurés pour fournir à partir de la rotation de du moteur une énergie électrique afin d'autoalimenter ledit dispositif de protection.

5. Dispositif de protection selon la revendication précédente, dans lequel les premier et second capteurs de vitesses sont du type inductif, par exemple à roue phonique, du type enroulement d'alternateur ou bien un capteur électrique actif de mesure de vitesse.

6. Dispositif de protection selon l'une des revendications précédentes, comprenant un polariseur (P) monté en parallèle de la source (S) de tension, ledit polariseur étant configuré pour polariser la tension issue de la source (S) de tension.

7. Dispositif de protection selon l'une des revendications précédentes, dans lequel les premier (I1) et second (I2) interrupteurs sont constitués par un transistor de préférence du type Darlington ou bipolaire.

8. Système d'alimentation en carburant d'un moteur d'un aéronef comprenant un dispositif de protection contre survitesse selon l'une des revendications précédentes.

9. Moteur d'aéronef comprenant un dispositif d'alimentation selon l'une des revendications précédentes.

## Patentansprüche

1. Überdrehzahlschutzvorrichtung für ein Flugzeugtriebwerk, die ein Kraftstoffversorgungssystem (10) für das Flugzeugtriebwerk umfasst, wobei die Schutzvorrichtung umfasst
eine Spannungsquelle (S), die so konfiguriert ist, dass sie eine Spannung mit negativer oder positiver Polarisation abgibt;
eine logische Steuervorrichtung (ECA), die in Reihe mit der Spannungsquelle (S) geschaltet ist, wobei die logische Steuervorrichtung (ECA) so konfiguriert ist, dass sie das Versorgungssystem (10) in Abhängigkeit von der abgegebenen Spannungspolarisation öffnet oder schließt;
eine erste elektronische Einheit (ECU#1), die in Reihe mit der Spannungsquelle und der logischen Steuervorrichtung (ECA) geschaltet ist, und die
einen ersten Drehzahlsensor (Cl) umfasst, der ein erstes diskretes elektrisches Steuersignal (CMD#1) in Abhängigkeit von der Triebwerkdrehzahl abgibt;
einen ersten normalerweise geschlossenen Schalter (I1), der durch das erste diskrete elektrische Steuersignal gesteuert wird;
eine zweite elektronische Einheit (ECU#2), die in Reihe mit der Spannungsquelle und der logischen Steuervorrichtung (ECA) geschaltet ist, und die
einen zweiten Geschwindigkeitssensor (C2) umfasst, der ein zweites diskretes elektrisches Steuersignal (CMD#2) in Abhängigkeit von der Triebwerkdrehzahl abgibt;
einen zweiten normalerweise geschlossenen Schalter (I2), der durch das zweite diskrete elektrische Steuersignal (CMD#2) gesteuert wird;
wobei der erste normalerweise geschlossene Schalter (11) und der zweite normalerweise geschlossene Schalter (12) einen Zustand 'geschlossenen' aufweisen, der einen Strom durchlässt, und einen Zustand 'offenen', der keinen Strom durchlässt;
wobei die logische Steuervorrichtung (ECA) zwischen einerseits der ersten elektronischen Einheit (ECU#1) und der zweiten elektronischen Einheit (ECU#2) angeordnet ist;
wobei der erste (I1) und der zweite (12) normalerweise geschlossene Schalter nur dann für das erste und das zweite diskrete elektrische Steuersignal empfindlich sind, wenn die Spannung die gleiche vorbestimmte Polarisation aufweist, wobei der erste (I1) und der zweite (12) Schalter für diese gleiche vorbestimmte Polarisation der ersten (ECU#1) und der zweiten (ECU#2) elektronischen Einheit ermöglichen, die logische Steuervorrichtung (ECA) der Spannungsquelle (S) in Abhängigkeit von den genannten diskreten elektrischen Steuersignalen zu trennen oder zu verbinden.

2. Schutzvorrichtung nach Anspruch 1, wobei der erste und der zweite Drehzahlsensor so konfiguriert sind, dass sie eine Triebwerkdrehzahl messen und diskrete elektrische Steuersignale abgeben, die
- einen hohen Zustand ('1') für eine Triebwerkdrehzahl VTriebwerk wie VSchwelle1 ≤ VTriebwerk < VSchwelle2 aufweisen, mit VSchwelle1 als erstem Schwellenwert und VSchwelle2 als zweitem Schwellenwert, die für eine Überdrehzahl kennzeichnend sind;
- einen niedrigen Zustand ('0') für eine Triebwerkdrehzahl wie 0 ≤ VTriebwerk < VSchwelle1 und wie VTriebwerk ≥ VSchwelle2, oder auch wenn das Triebwerk eine Störung aufweist.

3. Schutzvorrichtung nach einem der vorstehenden Ansprüche, wobei die erste (ECU#1) und die zweite (ECU#2) elektronische Einheit so konfiguriert sind, dass sie die logische Steuervorrichtung (ECA) mit der Spannungsquelle (S) verbinden, sobald der erste (I1) und der zweite (12) Schalter von einem 'offenen' Zustand in einen 'geschlossenen' Zustand übergehen, während die logische Steuervorrichtung (ECA) geöffnet ist, wobei die Zustandsänderung des ersten (I1) und des zweiten Schalters (12) das Schließen des Servoventils (ECA) bewirken.

4. Schutzvorrichtung nach einem der vorstehenden Ansprüche, wobei der erste und der zweite Drehzahlsensor so konfiguriert sind, dass sie ausgehend von der Drehung des Triebwerks eine elektrische Energie zur Eigenversorgung der Schutzvorrichtung bereitstellen.

5. Schutzvorrichtung nach dem vorstehenden Anspruch, wobei der erste und der zweite Drehzahlsensor vom Typ induktiv sind, z. B. mit einem Geberrad, vom Typ mit Wechselstromgenerator oder auch mit einem aktiven elektrischen Drehzahlmesssensor.

6. Schutzvorrichtung nach einem der vorstehenden Ansprüche, umfassend einen Polarisator (P), der parallel zur Spannungsquelle (S) montiert ist, wobei der Polarisator so konfiguriert ist, dass er die von der Spannungsquelle (S) ausgehende Spannung polarisiert.

7. Schutzvorrichtung nach einem der vorstehenden Ansprüche, wobei der erste (I1) und der zweite (12) Schalter aus einem vorzugsweise Darlington - oder Bipolartransistor bestehen.

8. Kraftstoffversorgungssystem eines Flugzeugtriebwerks, das eine Überdrehzahlschutzvorrichtung nach einem der vorstehenden Ansprüche umfasst.

9. Flugzeugtriebwerk, das eine Versorgungsvorrichtung nach einem der vorstehenden Ansprüche umfasst.

## Claims

1. An overspeed protection device of an aircraft engine comprising a fuel supply system (10) of said aircraft engine, the protection device comprising
a voltage source (S) configured to deliver voltage according to negative or positive polarization;
a logic control device (ECA) connected in series to the voltage source (S), said logic control device (ECA) being configured to open or close the supply system (10) as a function of the polarization of the delivered voltage;
a first electronic unit (ECU#1) connected in series to the voltage source and the logic control device (ECA) and which comprises
a first speed sensor (C1) delivering a first discrete electric control signal (CMD#1) as a function of the speed of the engine;
a normally closed first switch (I1) controlled by said first discrete electric control signal;
a second electronic unit (ECU#2) connected in series to the voltage source and the logic control device (ECA) and which comprises
a second speed sensor (C2) delivering a second discrete electric control signal (CMD#2) as a function of the speed of the engine;
a normally closed second switch (12) controlled by said second discrete electric control signal (CMD#2);
the normally closed first switch (I1) and the normally closed second switch (12) having a 'closed' state letting current pass through and an 'open' state letting no current pass through;
the logic control device (ECA) being arranged between both the first electronic unit (ECU#1) and the second electronic unit (ECU#2);
the normally closed first (I1) and second (12) switches being sensitive respectively to the first and second discrete electric control signals only if the voltage has a same predetermined polarization, for this same predetermined polarization, the first (I1) and second (12) switches letting the first (ECU#1) and second (ECU#2) electronic units isolate or connect the logic control device (ECA) of the voltage source (S) as a function of said discrete electric control signals.

2. The protection device according to claim 1, wherein the first and second speed sensors are configured to measure a speed of the engine and deliver discrete electric control signals having
- a high state ('1') for a speed of the engine Vengine such as Vthreshold1 ≤ Vengine < Vthreshold2, with Vthreshold1 a first threshold and Vthreshold2 a second threshold characteristic of overspeed;
- a low state ('0') for a speed of the engine such as 0 ≤ Vengine < Vthreshold1 and such as Vengine ≥ Vthreshold2, or else when the engine has a breakdown.

3. The protection device according to one of the preceding claims, wherein the first (ECU#1) and second (ECU#2) electronic units are configured to connect the logic control device (ECA) to the voltage source (S) as soon as the first (I1) and second (12) switches move from an 'open' state to a 'closed' state while the logic control device (ECA) was open, the change of state of said first (I1) and second (12) switches causing closing of the servo-valve (ECA).

4. The protection device according to one of the preceding claims, wherein the first and second speed sensors are configured to provide electric energy from rotation of the engine so as to self-feed said protection device.

5. The protection device according to the preceding claim, wherein the first and second speed sensors are of inductive type, for example with a phonic wheel, of alternator winding type or else an active electric sensor for measuring speed.

6. The protection device according to one of the preceding claims, comprising a polarizer (P) mounted in parallel with the voltage source (S), said polarizer being configured to polarize voltage coming from the voltage source (S).

7. The protection device according to one of the preceding claims, wherein the first (I1) and second (12) switches are constituted by a transistor preferably of Darlington or bipolar type.

8. A fuel supply system of an aircraft engine comprising an overspeed protection device according to one of the preceding claims.

9. An aircraft engine comprising a supply device according to one of the preceding claims.
